# EUROPEAN PATENT SPECIFICATION

(11) **EP 2 144 458 B1**
(45) Date of publication and mention of the grant of the patent: **26.08.2020**
(21) Application number: 08159871.6
(22) Date of filing: 08.07.2008
(51) Int. Cl.: H04W 4/24

(54) **A system operable to enable mobile access**
Zur Bereitstellung eines Mobilzugriffs fähiges System
Système pouvant être utilisé pour permettre l'accès mobile

(43) Date of publication of application: 13.01.2010
(73) Proprietor: Synapse International S.A., 8211 Mamer (LU)
(72) Inventor: Bergqvist, Per, 8211 Mamer (LU)
(74) Representative: Groth & Co. KB

(56) References cited:
- WO-A-2006/000884
- WO-A-2007/097786
- US-A1- 2003 118 045
- US-A1- 2008 081 611
- US-B1- 6 332 579

## Description

### Field of the invention

The present invention relates in a first aspect to a system operable to enable mobile access for a mobile computer means to a cellular network or a distributed computer network.

According to a second aspect the present invention relates to a method for enabling mobile access for a mobile computer means to a cellular network or a distributed computer network.

According to a third aspect the present invention relates to at least one computer program product for enabling mobile access for a mobile computer means to a cellular network or a distributed network.

### Background of the invention

In the world of today it is quite common that people travel to other countries as tourists or for business reasons bringing with them their computers that are connected to the Internet using the cellular networks. Normally, it is predictable to know the costs of transferring data to or from the computer using the cellular network. However, when roaming in to another operator the cost of transferring data are not predictable any more. Furthermore, the configuration and set up of the cellular modem is sometimes also not performed flawlessly.

The current solution to the problems described above is that a manual configuration is necessary which configuration is error prone. It is also possible in some cases that the actual necessary configuration is not possible to perform due to missing functionality in the computer or SIM card.

The patent document US-2007/0121284 relates to a laptop-style computer that incorporates the usage of memory cards in general and also the usage of a SIM card that is used in order to enable the usage of a communicator. The document teaches nothing about how the communication between the SIM card and the laptop is set up or how the SIM card communicates with the mobile/wireless network.

The patent document US-2008/0133708 relates to the sharing of information with other users through context based recognition whereby third-parties may contact a user via the most appropriate means of communication at any given time as reflected by status information.

It describes mainly a client-server system where configuration data is stored in the server. Furthermore, it describes the usage of WAP push as a mean for fetching data from the mobile device.

The patent document US-6, 496, 689 B1 relates to indication of charging information using the USSD mechanism. To achieve an improved overview on service charges for a subscriber to a digital cellular communication network it is proposed to provide a mobile station with a charging indication unit adapted to receive charging information as unstructured supplementary service data messages (USSD) via the unstructured supplementary service data dialog. Further, as more detailed information on the kind of service and on the amount of data transferred is available a detailed estimate on the actual cost that may be displayed to the user of the mobile station.

The patent document US-2007/0256135 A1 relates to a way of securing access to a WLAN for a dual mode device (WLAN and, for example GSM).

The patent document US-2004/0127204 A1 relates to a method and apparatus to establish communication. The method to establish a connection to a local area network is performed by configuring a mobile unit (MU) of a wireless local area network (WLAN) parameters. The configuration may be performed by using a telecommunication system messaging service to exchange the configuration information between the mobile unit and a public access point (AP) of the WLAN.

The patent document US-2002/0078185 A1 relates to configuration of WLAN parameters for a mobile unit where the parameters are sent to the unit using SMS, OTA or similar.

The patent document EP-1, 538, 856 A1 relates to a method and system for automatically configuring a device in a communication network. The method involves detecting a need for configuration of a communication apparatus, e. g. laptop computer, based on the presence or absence of events stored in an identification card, e. g. subscriber identity module (SIM) card. The need for configuration is detected after determining whether the apparatus has already been identified by the card, or whether the apparatus is already configured.

The patent document US 2003/118045 A1 relates to a computer with a SIM card for identifying users and connecting to communications network. A SIM card interface is applied to connect to a SIM card, which contains the personal information of a user and his/her identification information for the network, where the personal information contains a password. A main module is applied to read/write the personal information from/to the SIM card, and the main module can also be applied to compare the password string input by the user from the input device to the password stored in the SIM card. The patent document US20070254711 describes a remote embedded wireless communication module that obtains configuration information by accessing a Subscriber Identification Module (SIM) card. The configuration information may be preprogrammed onto the SIM card but If neither configuration information nor initial session information are found on the SIM card, the remote embedded communication module may receive the initial session information via a SMS message from the wireless network. Once it has initial session information, the remote embedded wireless communication module may proceed to download, execute, and store session information.

The patent document WO2007097786 discloses an application where cost information for the use of the application can be updated automatically by updating a cost table in a SIM card. It contains a messaging application that provides the user with information about the type and cost of messages to be sent, and it includes a cost estimation function for estimating the cost of a message and indicates the estimated cost to the user before it is sent. The user can be informed of cost before a message is sent and have the option to send the message if so chosen. Cost information may be stored in a SIM card or other removable memory device.

### Summary of the invention

The above mentioned problems are solved by a system operable to enable mobile access for a mobile computer means, comprised in the system, to a cellular network or a distributed computer network. The system also comprises an interface means operable to reuse the standard AT-dialog and overlay the dialog with a higher level protocol encoded in a format that is suitable for the AT-dialog command set to exchange configuration data for the cellular network between a mobile memory means, comprised in the system, and the mobile computer means. The configuration data first is sent from a user's operators' cellular network to the mobile memory means. The mobile computer means comprises a client means operable to retrieve the configuration data, whereby the mobile computer means is operable to automatically set up a connection to the cellular network or distributed computer network.

An advantage with the system according to the present invention is that it makes it possible for the user of the computer to access e. g. the Internet in a predictable way.

A further advantage in this context is achieved if the interface means comprises a configuration means operable to exchange the configuration data, and if the client means comprises a configuration client means operable to retrieve the configuration data.

Furthermore, it is an advantage in this context if the interface means also comprises a cost plan means operable to exchange cost plan data between the mobile memory means and the mobile computer means, and if the client means also comprises a cost plan client means operable to retrieve the cost plan data.

By this it will be possible for the user to always be connected independent of location without the need to worry about the cost for accessing e. g. the Internet.

A further advantage in this context is achieved if the interface means also comprises a current cost means operable to exchange current cost data between the mobile memory means and the mobile computer means, and if the client means also comprises a current cost client means operable to retrieve the current cost data.

Furthermore, it is an advantage in this context if the interface means also comprises an operator information means operable to exchange operator information data between the mobile memory means and the mobile computer means, and if the client means also comprises an operator information client means operable to retrieve the operator information data.

A further advantage in this context is achieved if the mobile computer means comprises a display means connected to the client means and operable to display the data from the client means.

Furthermore, it is an advantage in this context if the mobile memory means is a SIM (Subscriber Identity Module) card.

A further advantage in this context is achieved if the cellular network is a public WLAN (Wireless Local Area Network) and if the interface means is operable to exchange authorization keys for the mobile computer means between the mobile memory means and the mobile computer means.

The above mentioned problems are also solved with a method for enabling mobile access where the method is performed with the aid of a system. The method enables mobile access for a mobile computer means, comprised in the system, to a cellular network or a distributed computer network. The method comprises the steps: with the aid of an interface means comprised in the system, to reuse the standard AT-dialog and overlay the dialog with a higher level protocol encoded in a format that is suitable for the AT-dialog command set to exchange configuration data for the cellular network between a mobile memory means comprised in the system and the mobile computer means, wherein the configuration data first is sent from a user's operators' cellular network to the mobile memory means; with the aid of a client means comprised in the mobile computer means, to retrieve the configuration data; and with the aid of the mobile computer means , to automatically set up a connection to the cellular network or distributed computer network.

An advantage with the method according to the present invention is that it makes it possible for a user of the computer to access e. g. the Internet in a predictable way.

A further advantage in this context is achieved if the exchange step is performed with the aid of a configuration means comprised in the interface means, and if the retrieve step is performed with the aid of a configuration client means comprised in the client means.

Furthermore, it is an advantage in this context if the method also comprises the steps: with the aid of a cost plan means comprised in the interface means, to exchange cost plan data between the mobile memory means and the mobile computer means; and with the aid of a cost plan client means comprised in the client means, to retrieve the cost plan data.

By this it will be possible for a user to always be connected independent of location without the need to worry about the cost for accessing e. g. the Internet.

A further advantage in this context is achieved if the method also comprises the steps: with the aid of a current cost means comprised in the interface means, to exchange current cost data between the mobile memory means and the mobile computer means; and with the aid of a current cost client means comprised in the client means, to retrieve the current cost data.

Furthermore, it is an advantage in this context if the method also comprises the steps: with the aid of an operator information means comprised in the interface means, to exchange operator information data between the mobile memory means and the mobile computer means; and with the aid of an operator information client means comprised in the client means, to retrieve the operator information data.

A further advantage in this context is achieved if the method also comprises the step: with the aid of a display means comprised in the mobile computer means, and connected to the client means, to display data from the client means.

Furthermore, it is an advantage in this context if the cellular network is a public WLAN (Wireless Local Area Network), and if the method also comprises the step: to exchange authorization keys for the mobile computer means between the mobile memory means and the mobile computer means.

The above mentioned problems are also solved with at least one computer program product, where the at least one computer program product is/are directly loadable into the internal memory of at least one digital computer, and comprises software code portions for performing the steps of the method according to the present invention when the at least one product is/are run on the at least one computer.

An advantage with this computer program product is that it makes it possible for the user of the computer to access e. g. the Internet in a predictable way.

It will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with a reference to the accompanying drawings, in which:

### Brief description of the drawings

Fig. 1 is a block diagram of the system operable to enable mobile access according to the present invention;
Fig. 2 is a block diagram in more detail of some parts of the system disclosed in Fig. 1;
Fig. 3 is a flow chart of the method for enabling mobile access according to the present invention; and
Fig. 4 schematically shows a number of computer program products according to the present invention.

### Detailed description of the preferred embodiments

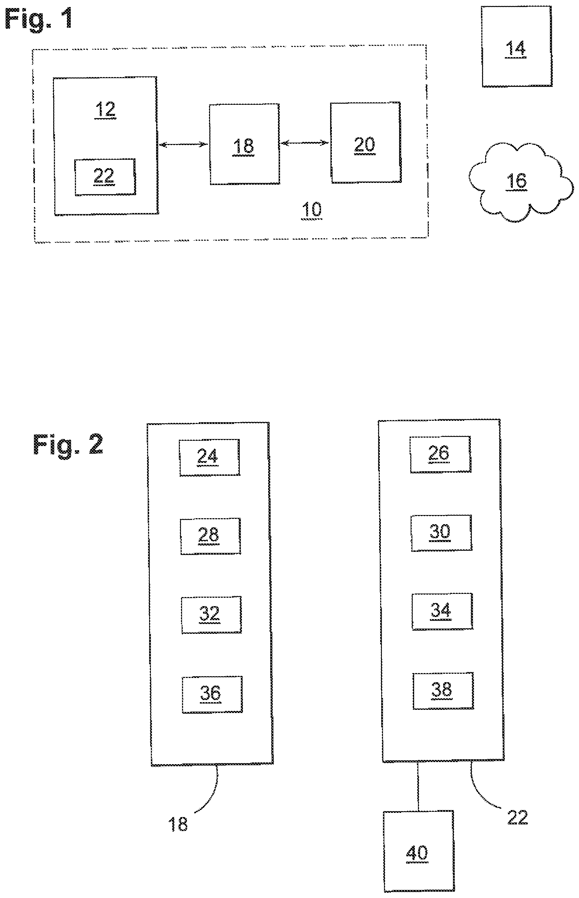

In fig. 1 there is disclosed a block diagram of the system 10 according to the present invention. The system 10 is operable to enable mobile access for a mobile computer means 12 to a cellular network 14 or a distributed computer network 16. As is apparent in fig.1, the mobile computer means 12 is comprised in the system 10. The system 10 also comprises an interface means 18 operable to exchange configuration data for the cellular network 14 between a mobile memory means 20 and the mobile computer means 12. As is apparent in fig. 1, the mobile memory means 20 is comprised in the system 10. The mobile computer means 12 comprises a client means 22 operable to retrieve the configuration data, whereby the mobile computer means 12 is operable to automatically set up a connection to the distributed computer network 16 or the cellular network 14.

In fig. 2 there is disclosed a block diagram in more detail of some parts of the system 10 disclosed in fig. 1. The main parts disclosed in more detail in fig. 2 are the interface means 18, and the client means 22. As is apparent in fig. 2, the interface means 18 comprises a configuration means 24 operable to exchange the configuration data. The client means 22 comprises a configuration client means 26 operable to retrieve the configuration data. Furthermore, the interface means 18 comprises a cost plan means 28 operable to exchange cost plan data between the mobile memory means 20 and the mobile computer means 12. The client means 22 also comprises a cost plan client means 30 operable to retrieve the cost plan data.

As also is apparent in fig. 2, the interface means 18 comprises a current cost means 32 operable to exchange current cost data between the mobile memory means 20 and the mobile computer means 12. The client means 22 comprises a current cost client means 34 operable to retrieve the current cost data. Furthermore, the interface means 18 also comprises an operator information means 36 operable to exchange operator information data between the mobile memory means 20 and the mobile computer means 12. The client means 22 comprises an operator information client means 38 operable to retrieve the operator information data. As also is partly apparent in fig. 2, the mobile computer means 12 comprises a display means 40 connected to the client means 22. The display means 40 is operable to display the data from the client means 22.

According to one preferred embodiment of the system 10, the mobile memory means 20 is a SIM (Subscriber Identity Module) card 20.

According to another embodiment, the distributed computer network 16 is the Internet 16.

Furthermore, according to another preferred embodiment of the system 10, the cellular network 14 is a public WLAN (Wireless Local Area Network) 14. In that case, the interface means 18 is operable to exchange authorization keys for the mobile computer means 12 between the mobile memory means 20 and the mobile computer means 12.

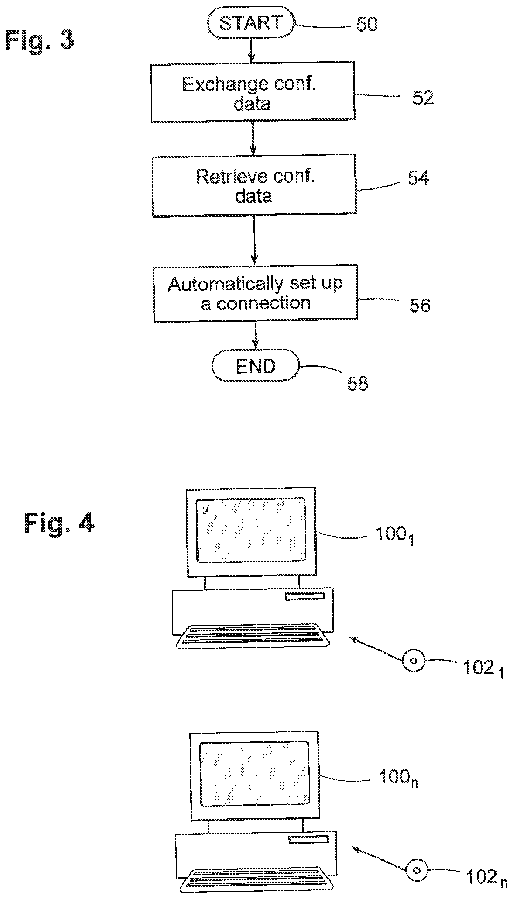

In fig. 3 there is disclosed a flow chart of a method for enabling mobile access, with the aid of a system 10 (see fig. 1, and 2), for a mobile computer means 12, comprised in the system 10, to a cellular network 14 or a distributed computer network 16. The method begins at block 50. Thereafter, the method continues, at block 52, with the step: with the aid of an interface means 18 comprised in the system 10, to exchange configuration data for the cellular network 14 between a mobile memory means 20 comprised in the system 10 and the computer means 12. The method continues, at block 54, with the step: with the aid of a client means 22 comprised in the mobile computer means 12, to retrieve the configuration data. Thereafter, the method continues, at block 56, with the step: with the aid of the mobile computer means 12, to automatically set up a connection to the distributed computer network 16 or to the cellular network 14. The method is completed at block 58.

According to another embodiment of the method according to the present invention, the exchange step is performed with the aid of a configuration means 24 comprised in the interface means 18, and the retrieve step is performed with the aid of a configuration client means 26 comprised in the client means 22.

In a further embodiment of the method, it also comprises the steps: with the aid of a cost plan means 28 comprised in the interface means 18, to exchange cost plan data between the mobile memory means 20 and the mobile computer means 12; and with the aid of a cost plan client means 30 comprised in the client means 22, to retrieve the cost plan data.

According to another embodiment, the method also comprises the steps: with the aid of a current cost means 32 comprised in the interface means 18, to exchange current cost data between the mobile memory means 20 and the mobile computer means 12; and with the aid of a current cost client means 22, to retrieve the current cost data.

In a further embodiment of the method, it also comprises the steps: with the aid of an operator information means 36 comprised in the interface means 18, to exchange operator information between the mobile memory means 20 and the mobile computer means 12; and with the aid of an operator information client means 38 comprised in the client means 22, to retrieve the operator information data.

Furthermore, the method can also comprise the step: with the aid of a display means 40 comprised in the mobile computer means 12, to display data from the client means 22.

In a further embodiment of the method, wherein the cellular network 14 is a public WLAN (Wireless Local Area Network) 14, the method also comprises the step: with the aid of the interface means 18, to exchange authorization keys for the mobile computer means 12 between the mobile memory means 20 and the mobile computer means 12.

In fig. 4, some computer program products 102₁, ..., 102ₙ according to the present invention are schematically shown. In fig. 4, n different digital computers 100₁, ..., 100ₙ are shown, wherein n is an integer. In fig. 4, n different computer program products 102₁, ..., 102ₙ are shown, here in the form of CD discs. The different computer program products 102₁, ..., 102ₙ are directly loadable into the internal memory of the n different computers 100₁, ..., 100ₙ. Each computer program product 102₁, ..., 102ₙ comprises software code portions for performing all the steps according to fig. 3, when the product/products is/are run on the computers 100₁, ..., 100ₙ. The computer program products 102₁, ..., 102ₙ may, for instance, be in the form of diskettes, RAM discs, magnetic tapes, magneto-optical discs or some other suitable products.

In below follows a description of the invention formulated in another way.

The interface means 18 makes it possible for a client means 22 in the computer means 12 to retrieve information such as: Internet configuration; contains information about proxies, access points and similar making it possible for the computer means 12 to automatically set up the Internet connection. Cost plan indication; contains information about the cost of accessing the Internet. For example, if it is a flat rate connection, a virtual flat rate connection or a non flat rate connection (e. g. the user has to pay for each byte transferred). Current cost; contains for example information about the current amount of spent money. Another example of information that can be presented to the user is, when virtual flat rate is used, where the amount of number of MB left before a non flat rate cost is enabled. Operator information; e. g. the current operator in use is not recommended by the users own operator and the user is therefore recommended to change operator.

The information is sent to the SIM card 20 from the users own operators' network using services such as SMS, USSD, standard DATA connection or similar. Access methods such as SIMOTA can also be applied.

The client means 22 in the computer 12 is the one that is responsible for using the configuration and information stored in the SIM card 20. It is also the client means 22 that is the one that shall present cost plans and similar to the user and inform him/her about the actual cost, which operator that is recommended to use when accessing the Internet. The client means 22 can use the configuration data and set things up using, for example, preferences defined by the user.

The interface means 18 enables information exchange between the computer 12 and the SIM card 20. Today this is only possible to some extent by the use of the AT-command set. There is however no standardized way to exchange higher level information and the AT-commands allows for things like dialling numbers and similar.

Possible implementations can be as follows:
Reuse the standard AT-dialog and overlay this dialog with the higher level protocol. This means that the SIM card 20 is connected to the modem and that the computer 12 communicates using the serial port between the modem and the computer 12. The modem then relays the information to the SIM card 20. The higher level protocol can be encoded in a format that is suitable for the AT-dialog command set.

The computer 12 is connected to the SIM card 20 directly via a serial bus that allows for information exchange. There is however a need in this case to also have a secure communication path between the SIM card 20 and the modem in order to allow call-setup for the modem. In this case both software and hardware changes are needed.

The information that are accessible on the SIM card 20 can appear there using different means, as follows:
When the SIM card 20 is set up (during provisioning at operator site), configuration data that the present invention describes can be stored on the SIM card 20.

At normal operation, e. g. the subscriber is connected to the operator and the "network" (the DMS system or similar). The DMS system notice that the configuration data must be updated and initiates this update. This update can be performed using different means, for example:
A set of SMS:s are sent.

A USSD session is set up and the data are sent using this session.

An OMA-DM session is set up and the data are sent using that session.

The invention is not limited to the described embodiments. It will be evident for those skilled in the art that many different modifications are feasible within the scope of the following Claims.

## Claims

1. A system (10) operable to enable mobile access for a mobile computer means (12), comprised in said system (10), to a cellular network (14) or a distributed computer network (16), **characterized in that** said system (10) also comprises an interface means (18) operable to reuse the standard AT-dialog and overlay said dialog with a higher level protocol encoded in a format that is suitable for the AT-dialog command set to exchange configuration data for said cellular network (14) between a mobile memory means (20) comprised in said system (10) and said mobile computer means (12), wherein said configuration data first is sent from a user's operators' cellular network (14) to said mobile memory means (20), and **in that** said mobile computer means (12) comprises a client means (22) operable to retrieve said configuration data, whereby said mobile computer means (12) is operable to automatically set up a connection to said cellular network (14) or said distributed computer network (16).

2. A system (10) operable to enable mobile access for a mobile computer means (12) according to Claim 1, **characterized in that** said interface means (18) comprises a configuration means (24) operable to exchange said configuration data, and **in that** said client means (22) comprises a configuration client means (26) operable to retrieve said configuration data.

3. A system (10) operable to enable mobile access for a mobile computer means (12) according to Claim 1 or 2, **characterized in that** said interface means (18) also comprises a cost plan means (28) operable to exchange cost plan data between said mobile memory means (20) and said mobile computer means (12), and **in that** said client means (22) also comprises a cost plan client means (30) operable to retrieve said cost plan data.

4. A system (10) operable to enable mobile access for a mobile computer means (12) according to any one of Claims 1-3, **characterized in that** said interface means (18) also comprises a current cost means (32) operable to exchange current cost data between said mobile memory means (20) and said mobile computer means (12), and **in that** said client means (22) also comprises a current cost client means (34) operable to retrieve said current cost data.

5. A system (10) operable to enable mobile access for a mobile computer means (12) according to any one of Claims 1-4, **characterized in that** said interface means (18) also comprises an operator information means (36) operable to exchange operator information data between said mobile memory means (20) and said mobile computer means (12), and **in that** said client means (22) also comprises an operator information client means (38) operable to retrieve said operator information data.

6. A system (10) operable to enable mobile access for a mobile computer means (12) according to any one of Claims 1-5, **characterized in that** said mobile computer means (12) comprises a display means (40) connected to said client means (22), and operable to display said data from said client means (22).

7. A system (10) operable to enable mobile access for a mobile computer means (12) according to any one of Claims 1-6, **characterized in that** said mobile memory means (20) is a SIM (Subscriber Identity Module) card (20).

8. A system (10) operable to enable mobile access for a mobile computer means (12) according to any one of Claims 1-7, **characterized in that** said distributed computer network (16) is the Internet (16).

9. A system (10) operable to enable mobile access for a mobile computer means (12) according to any one of Claims 1-8, **characterized in that** said cellular network (14) is a public WLAN (Wireless Local Area Network) (14), and **in that** said interface means (18) is operable to exchange authorization keys for said mobile computer means (12) between said mobile memory means (20) and said mobile computer means (12).

10. A method for enabling mobile access, with the aid of a system (10), for a mobile computer means (12), comprised in said system (10), to a cellular network (14) or a distributed computer network (16), **characterized in that** said method comprises the steps: with the aid of an interface means (18) comprised in said system (10), to reuse the standard AT-dialog and overlay said dialog with a higher level protocol encoded in a format that is suitable for the AT-dialog command set to exchange configuration data for said cellular network (14) between a mobile memory means (20) comprised in said system (10) and said mobile computer means (12), wherein said configuration data first is sent from a user's operators' cellular network (14) to said mobile memory means (20); with the aid of a client means (22) comprised in said mobile computer means (12), to retrieve said configuration data; and with the aid of said mobile computer means (12), to automatically set up a connection to said cellular network (14) or said distributed computer network (16).

11. A method for enabling mobile access for a mobile computer means (12) according to Claim 10, **characterized in that** said exchange step is performed with the aid of a configuration means (24) comprised in said interface means (18), and **in that** said retrieve step is performed with the aid of a configuration client means (26) comprised in said client means (22).

12. A method for enabling mobile access for a mobile computer means (12) according to Claim 10 or 11, **characterized in that** said method also comprises the steps: with the aid of a cost plan means (28) comprised in said interface means (18), to exchange cost plan data between said mobile memory means (20) and said mobile computer means (12); and with the aid of a cost plan client means (30) comprised in said client means (22), to retrieve said cost plan data.

13. A method for enabling mobile access for a mobile computer means (12) according to any one of Claims 10-12, **characterized in that** said method also comprises the steps: with the aid of a current cost means (32) comprised in said interface means (18), to exchange current cost data between said mobile memory means (20) and said mobile computer means (12); and with the aid of a current cost client means (34) comprised in said client means (22), to retrieve said current cost data.

14. A method for enabling mobile access for a mobile computer means (12) according to any one of Claims 10-13, **characterized in that** said method also comprises the steps: with the aid of an operator information means (36) comprised in said interface means (18), to exchange operator information data between said mobile memory means (20) and said mobile computer means (12); and with the aid of an operator information client means (38) comprised in said client means (22), to retrieve said operator information data.

15. A method for enabling mobile access for a mobile computer means (12) according to any one of Claims 10-14, **characterized in that** said method also comprises the step: with the aid of a display means (40) comprised in said mobile computer means (12), and connected to said client means (22), to display data from said client means (22).

16. A method for enabling mobile access for a mobile computer means (12) according to any one of Claims 10-15, **characterized in that** said cellular network (14) is a public WLAN (Wireless Local Area Network) (14), and **in that** said method also comprises the step: with the aid of said interface means (18), to exchange authorization keys for said mobile computer means (12) between said mobile memory means (20) and said mobile computer means (12).

17. At least one computer program product (102₁, ..., 102ₙ) directly loadable into the internal memory of at least one digital computer (100₁, ..., 100ₙ), comprising software code portions for performing the steps of Claim 10 when said at least one product (102₁, ..., 102ₙ) is/are run on said at least one computer (1001, ..., 100n).

## Patentansprüche

1. System (10), das betriebsfähig ist, einem in dem System (10) umfassten mobilen Computermittel (12) mobilen Zugang zu einem zellularen Netz (14) oder einem verteilten Computernetz (16) zu ermöglichen, **dadurch gekennzeichnet, dass** das System (10) zudem ein Schnittstellenmittel (18) umfasst, das betriebsfähig ist, den AT-Standard-Dialog wiederzuverwenden und den Dialog mit einem Protokoll einer höheren Ebene zu überlagern, das in einem Format codiert ist, das sich für den AT-Dialog-Befehlssatz eignet, um Konfigurationsdaten für das zellulare Netz (14) zwischen einem in dem System (10) umfassten mobilen Speichermittel (20) und dem mobilen Computermittel (12) auszutauschen, wobei die Konfigurationsdaten zunächst von einem zellularen Netz (14) eines Betreibers eines Nutzers an das mobile Speichermittel (20) gesendet werden, und dass das mobile Computermittel (12) ein Client-Mittel (22) umfasst, das betriebsfähig ist, die Konfigurationsdaten abzurufen, wodurch das mobile Computermittel (12) betriebsfähig ist, automatisch eine Verbindung mit dem zellularen Netz (14) oder dem verteilten Computernetz (16) einzurichten.

2. Zum Ermöglichen von mobilem Zugang für ein mobiles Computermittel (12) betriebsfähiges System (10) nach Anspruch 1, **dadurch gekennzeichnet, dass** das Schnittstellenmittel (18) ein Konfigurationsmittel (24) umfasst, das betriebsfähig ist, die Konfigurationsdaten auszutauschen, und dass das Client-Mittel (22) ein Konfigurations-Client-Mittel (26) umfasst, das betriebsfähig ist, die Konfigurationsdaten abzurufen.

3. Zum Ermöglichen von mobilem Zugang für ein mobiles Computermittel (12) betriebsfähiges System (10) nach Anspruch 1 oder 2, **dadurch gekennzeichnet, dass** das Schnittstellenmittel (18) zudem ein Kostenplanmittel (28) umfasst, das betriebsfähig ist, Kostenplandaten zwischen dem mobilen Speichermittel (20) und dem mobilen Computermittel (12) auszutauschen, und dass das Client-Mittel (22) zudem ein Kostenplan-Client-Mittel (30) umfasst, das betriebsfähig ist, die Kostenplandaten abzurufen.

4. Zum Ermöglichen von mobilem Zugang für ein mobiles Computermittel (12) betriebsfähiges System (10) nach einem der Ansprüche 1 bis 3, **dadurch gekennzeichnet, dass** das Schnittstellenmittel (18) zudem ein Mittel (32) für aktuelle Kosten umfasst, das betriebsfähig ist, Daten über aktuelle Kosten zwischen dem mobilen Speichermittel (20) und dem mobilen Computermittel (12) auszutauschen, und dass das Client-Mittel (22) zudem ein Client-Mittel (34) für aktuelle Kosten umfasst, das betriebsfähig ist, die Daten über aktuelle Kosten abzurufen.

5. Zum Ermöglichen von mobilem Zugang für ein mobiles Computermittel (12) betriebsfähiges System (10) nach einem der Ansprüche 1 bis 4, **dadurch gekennzeichnet, dass** das Schnittstellenmittel (18) zudem ein Mittel (36) für Betreiberinformationen umfasst, das betriebsfähig ist, Betreiberinformationsdaten zwischen dem mobilen Speichermittel (20) und dem mobilen Computermittel (12) auszutauschen, und dass das Client-Mittel (22) zudem ein Client-Mittel (38) für Betreiberinformationen umfasst, das betriebsfähig ist, die Betreiberinformationsdaten abzurufen.

6. Zum Ermöglichen von mobilem Zugang für ein mobiles Computermittel (12) betriebsfähiges System (10) nach einem der Ansprüche 1 bis 5, **dadurch gekennzeichnet, dass** das mobile Computermittel (12) ein Anzeigemittel (40) umfasst, das mit dem Client-Mittel (22) verbunden und betriebsfähig ist, die von dem Client-Mittel (22) stammenden Daten anzuzeigen.

7. Zum Ermöglichen von mobilem Zugang für ein mobiles Computermittel (12) betriebsfähiges System (10) nach einem der Ansprüche 1 bis 6, **dadurch gekennzeichnet, dass** es sich bei dem mobilen Speichermittel (20) um eine SIM-(Subscriber Identity Module) Karte (20) handelt.

8. Zum Ermöglichen von mobilem Zugang für ein mobiles Computermittel (12) betriebsfähiges System (10) nach einem der Ansprüche 1 bis 7, **dadurch gekennzeichnet, dass** es sich bei dem verteilten Computernetz (16) um das Internet (16) handelt.

9. Zum Ermöglichen von mobilem Zugang für ein mobiles Computermittel (12) betriebsfähiges System (10) nach einem der Ansprüche 1 bis 8, **dadurch gekennzeichnet, dass** es sich bei dem zellularen Netz (14) um ein öffentliches WLAN (Wireless Local Area Network, lokales Funknetz) (14) handelt und dass das Schnittstellenmittel (18) betriebsfähig ist, Autorisierungsschlüssel für das mobile Computermittel (12) zwischen dem mobilen Speichermittel (20) und dem mobilen Computermittel (12) auszutauschen.

10. Verfahren zum mithilfe eines Systems (10) erfolgenden Ermöglichen von mobilem Zugang zu einem zellularen Netz (14) oder einem verteilten Computernetz (16) für ein in dem System (10) umfasstes mobiles Computermittel (12), **dadurch gekennzeichnet, dass** das Verfahren die Schritte umfasst: mithilfe eines in dem System (10) umfassten Schnittstellenmittels (18) den AT-Standard-Dialog wiederzuverwenden und den Dialog mit einem Protokoll einer höheren Ebene zu überlagern, das in einem Format codiert ist, das sich für den AT-Dialog-Befehlssatz eignet, um Konfigurationsdaten für das zellulare Netz (14) zwischen einem in dem System (10) umfassten mobilen Speichermittel (20) und dem mobilen Computermittel (12) auszutauschen, wobei die Konfigurationsdaten zunächst von einem zellularen Netz (14) eines Betreibers eines Nutzers an das mobile Speichermittel (20) gesendet werden; mithilfe eines in dem mobilen Computermittel (12) umfassten Client-Mittels (22) die Konfigurationsdaten abzurufen; und mithilfe des mobilen Computermittels (12) automatisch eine Verbindung mit dem zellularen Netz (14) oder dem verteilten Computernetz (16) einzurichten.

11. Verfahren zum Ermöglichen von mobilem Zugang für ein mobiles Computermittel (12) nach Anspruch 10, **dadurch gekennzeichnet, dass** der Austauschschritt mithilfe eines in dem Schnittstellenmittel (18) umfassten Konfigurationsmittels (24) durchgeführt wird und dass der Abrufschritt mithilfe eines in dem Client-Mittel (22) umfassten Konfigurations-Client-Mittels (26) durchgeführt wird.

12. Verfahren zum Ermöglichen von mobilem Zugang für ein mobiles Computermittel (12) nach Anspruch 10 oder 11, **dadurch gekennzeichnet, dass** das Verfahren zudem die Schritte umfasst: mithilfe eines in dem Schnittstellenmittel (18) umfassten Kostenplanmittels (28) Kostenplandaten zwischen dem mobilen Speichermittel (20) und dem mobilen Computermittel (12) auszutauschen; und mithilfe eines in dem Client-Mittel (22) umfassten Kostenplan-Client-Mittels (30) die Kostenplandaten abzurufen.

13. Verfahren zum Ermöglichen von mobilem Zugang für ein mobiles Computermittel (12) nach einem der Ansprüche 10 bis 12, **dadurch gekennzeichnet, dass** das Verfahren zudem die Schritte umfasst: mithilfe eines in dem Schnittstellenmittel (18) umfassten Mittels (32) für aktuelle Kosten Daten über aktuelle Kosten zwischen dem mobilen Speichermittel (20) und dem mobilen Computermittel (12) auszutauschen; und mithilfe eines in dem Client-Mittel (22) umfassten Client-Mittels (34) für aktuelle Kosten die Daten über aktuelle Kosten abzurufen.

14. Verfahren zum Ermöglichen von mobilem Zugang für ein mobiles Computermittel (12) nach einem der Ansprüche 10 bis 13, **dadurch gekennzeichnet, dass** das Verfahren zudem die Schritte umfasst: mithilfe eines in dem Schnittstellenmittel (18) umfassten Mittels (36) für Betreiberinformationen Betreiberinformationsdaten zwischen dem mobilen Speichermittel (20) und dem mobilen Computermittel (12) auszutauschen; und mithilfe eines in dem Client-Mittel (22) umfassten Client-Mittels (38) für Betreiberinformationen die Betreiberinformationsdaten abzurufen.

15. Verfahren zum Ermöglichen von mobilem Zugang für ein mobiles Computermittel (12) nach einem der Ansprüche 10 bis 14, **dadurch gekennzeichnet, dass** das Verfahren zudem den Schritt umfasst: mithilfe eines in dem mobilen Computermittel (12) umfassten und mit dem Client-Mittel (22) verbundenen Anzeigemittels (40) von dem Client-Mittel (22) stammende Daten anzuzeigen.

16. Verfahren zum Ermöglichen von mobilem Zugang für ein mobiles Computermittel (12) nach einem der Ansprüche 10 bis 15, **dadurch gekennzeichnet, dass** es sich bei dem zellularen Netz (14) um ein öffentliches WLAN (Wireless Local Area Network, lokales Funknetz) (14) handelt und dass das Verfahren zudem den Schritt umfasst: mithilfe des Schnittstellenmittels (18) Autorisierungsschlüssel für das mobile Computermittel (12) zwischen dem mobilen Speichermittel (20) und dem mobilen Computermittel (12) auszutauschen.

17. Mindestens ein Computerprogrammprodukt (102₁, ..., 102ₙ), das direkt in den internen Speicher mindestens eines Digitalcomputers (100₁, ..., 100ₙ) ladbar ist und Softwarecodeabschnitte zum Durchführen der Schritte nach Anspruch 10 umfasst, wenn das mindestens eine Produkt (102₁, ..., 102ₙ) auf dem mindestens einen Computer (100₁, ..., 100ₙ) ausgeführt wird/werden.

## Revendications

1. Système (10) pouvant être mis en œuvre pour permettre l'accès mobile d'un moyen informatique mobile (12), contenu dans ledit système (10), à un réseau cellulaire (14) ou à un réseau informatique distribué (16), **caractérisé en ce que** ledit système (10) comprend également un moyen d'interface (18) pouvant être mis en œuvre pour réutiliser le dialogue AT standard et superposer ledit dialogue avec un protocole de niveau supérieur codé dans un format qui convient à l'ensemble de commandes du dialogue AT pour échanger des données de configuration pour ledit réseau cellulaire (14) entre un moyen de mémoire mobile (20) contenu dans ledit système (10) et ledit moyen informatique mobile (12), où lesdites données de configuration sont d'abord envoyées du réseau cellulaire (14) de l'opérateur de l'utilisateur audit moyen de mémoire mobile (20), et **en ce que** ledit moyen informatique mobile (12) comprend un moyen de client (22) pouvant être mis en œuvre pour récupérer lesdites données de configuration, moyennant quoi ledit moyen informatique mobile (12) peut être mis en œuvre pour établir automatiquement une connexion audit réseau cellulaire (14) ou audit réseau informatique distribué (16).

2. Système (10) pouvant être mis en œuvre pour permettre l'accès mobile d'un moyen informatique mobile (12) selon la revendication 1, **caractérisé en ce que** ledit moyen d'interface (18) comprend un moyen de configuration (24) pouvant être mis en œuvre pour échanger lesdites données de configuration, et **en ce que** ledit moyen de client (22) comprend un moyen de client de configuration (26) pouvant être mis en œuvre pour récupérer lesdites données de configuration.

3. Système (10) pouvant être mis en œuvre pour permettre l'accès mobile d'un moyen informatique mobile (12) selon la revendication 1 ou la revendication 2, **caractérisé en ce que** ledit moyen d'interface (18) comprend également un moyen de plan de coût (28) pouvant être mis en œuvre pour échanger des données de plan de coût entre ledit moyen de mémoire mobile (20) et ledit moyen informatique mobile (12), et **en ce que** ledit moyen de client (22) comprend également un moyen de client de plan de coût (30) pouvant être mis en œuvre pour récupérer lesdites données de plan de coût.

4. Système (10) pouvant être mis en œuvre pour permettre l'accès mobile d'un moyen informatique mobile (12) selon l'une quelconque des revendications 1 à 3, **caractérisé en ce que** ledit moyen d'interface (18) comprend également un moyen de coût courant (32) pouvant être mis en œuvre pour échanger des données de coût courant entre ledit moyen de mémoire mobile (20) et ledit moyen informatique mobile (12), et **en ce que** ledit moyen de client (22) comprend également un moyen de client de plan de coût (34) pouvant être mis en œuvre pour récupérer lesdites données de coût courant.

5. Système (10) pouvant être mis en œuvre pour permettre l'accès mobile d'un moyen informatique mobile (12) selon l'une quelconque des revendications 1 à 4, **caractérisé en ce que** ledit moyen d'interface (18) comprend également un moyen d'information d'opérateur (36) pouvant être mis en œuvre pour échanger des données d'information d'opérateur entre ledit moyen de mémoire mobile (20) et ledit moyen informatique mobile (12), et **en ce que** ledit moyen de client (22) comprend également un moyen de client d'information d'opérateur (38) pouvant être mis en œuvre pour récupérer lesdites données d'information d'opérateur.

6. Système (10) pouvant être mis en œuvre pour permettre l'accès mobile d'un moyen informatique mobile (12) selon l'une quelconque des revendications 1 à 5, **caractérisé en ce que** ledit moyen informatique mobile (12) comprend un moyen d'affichage (40) connecté audit moyen de client (22), et pouvant être mis en œuvre pour afficher lesdites données provenant dudit moyen de client (22).

7. Système (10) pouvant être mis en œuvre pour permettre l'accès mobile d'un moyen informatique mobile (12) selon l'une quelconque des revendications 1 à 6, **caractérisé en ce que** ledit moyen de mémoire mobile (20) est une carte SIM (Subscriber Identity Module) (20) .

8. Système (10) pouvant être mis en œuvre pour permettre l'accès mobile d'un moyen informatique mobile (12) selon l'une quelconque des revendications 1 à 7, **caractérisé en ce que** ledit réseau informatique distribué (16) est Internet (16).

9. Système (10) pouvant être mis en œuvre pour permettre l'accès mobile d'un moyen informatique mobile (12) selon l'une quelconque des revendications 1 à 8, **caractérisé en ce que** ledit réseau cellulaire (14) est un réseau local sans fil (WLAN) public (14), et **en ce que** ledit moyen d'interface (18) peut être mis en œuvre pour échanger des clés d'autorisation pour ledit moyen informatique mobile (12) entre ledit moyen de mémoire mobile (20) et ledit moyen informatique mobile (12).

10. Procédé pour permettre l'accès mobile, à l'aide d'un système (10), pour un moyen informatique mobile (12), contenu dans ledit système (10), à un réseau cellulaire (14) ou à un réseau informatique distribué (16), **caractérisé en ce que** ledit procédé comprend les étapes suivantes : à l'aide d'un moyen d'interface (18) contenu dans ledit système (10), réutiliser le dialogue AT standard et superposer ledit dialogue avec un protocole de niveau supérieur codé dans un format qui est approprié pour l'ensemble de commandes de dialogue AT pour échanger des données de configuration pour ledit réseau cellulaire (14) entre un moyen de mémoire mobile (20) contenu dans ledit système (10) et ledit moyen informatique mobile (12), où lesdites données de configuration sont d'abord envoyées du réseau cellulaire (14) de l'opérateur de l'utilisateur audit moyen de mémoire mobile (20) ; à l'aide d'un moyen de client (22) contenu dans ledit moyen informatique mobile (12), récupérer lesdites données de configuration ; et à l'aide dudit moyen informatique mobile (12), établir automatiquement une connexion audit réseau cellulaire (14) ou audit réseau informatique distribué (16).

11. Procédé pour permettre l'accès mobile d'un moyen informatique mobile (12) selon la revendication 10, **caractérisé en ce que** ladite étape d'échange est exécutée à l'aide d'un moyen de configuration (24) contenu dans ledit moyen d'interface (18), et **en ce que** ladite étape de récupération est exécutée à l'aide d'un moyen de client de configuration (26) contenu dans ledit moyen de client (22).

12. Procédé pour permettre l'accès mobile d'un moyen informatique mobile (12) selon la revendication 10 ou la revendication 11, **caractérisé en ce que** ledit procédé comprend également les étapes suivantes : à l'aide d'un moyen de plan de coût (28) contenu dans ledit moyen d'interface (18), échanger des données de plan de coût entre ledit moyen de mémoire mobile (20) et ledit moyen informatique mobile (12) ; et, à l'aide d'un moyen de client de plan de coût (30) contenu dans ledit moyen de client (22), récupérer lesdites données de plan de coût.

13. Procédé pour permettre l'accès mobile d'un moyen informatique mobile (12) selon l'une quelconque des revendications 10 à 12, **caractérisé en ce que** ledit procédé comprend également les étapes suivantes : à l'aide d'un moyen de coût courant (32) contenu dans ledit moyen d'interface (18), échanger des données de coût courant entre ledit moyen de mémoire mobile (20) et ledit moyen informatique mobile (12) ; et, à l'aide d'un moyen de client de coût courant (34) contenu dans ledit moyen de client (22), récupérer lesdites données de coût courant.

14. Procédé pour permettre l'accès mobile d'un moyen informatique mobile (12) selon l'une quelconque des revendications 10 à 13, **caractérisé en ce que** ledit procédé comprend également les étapes suivantes : à l'aide d'un moyen d'information d'opérateur (36) contenu dans ledit moyen d'interface (18), échanger des données d'information d'opérateur entre ledit moyen de mémoire mobile (20) et ledit moyen informatique mobile (12) ; et, à l'aide d'un moyen de client d'information d'opérateur (38) contenu dans ledit moyen de client (22), récupérer lesdites données d'information d'opérateur.

15. Procédé pour permettre l'accès mobile d'un moyen informatique mobile (12) selon l'une quelconque des revendications 10 à 14, **caractérisé en ce que** ledit procédé comprend également l'étape suivante : à l'aide d'un moyen d'affichage (40) contenu dans ledit moyen informatique mobile (12), et connecté audit moyen de client (22), afficher des données provenant dudit moyen de client (22).

16. Procédé pour permettre l'accès mobile d'un moyen informatique mobile (12) selon l'une quelconque des revendications 10 à 15, **caractérisé en ce que** ledit réseau cellulaire (14) est un réseau local sans fil (WLAN) public (14), et **en ce que** ledit procédé comprend également l'étape suivante : à l'aide dudit moyen d'interface (18), échanger des clés d'autorisation pour ledit moyen informatique mobile (12) entre ledit moyen de mémoire mobile (20) et ledit moyen informatique mobile (12).

17. Au moins un produit programme informatique (102₁, ..., 102ₙ) directement chargeable dans la mémoire interne d'au moins un ordinateur numérique (100₁, ..., 100ₙ), comprenant des parties de code logiciel pour exécuter les étapes de la revendication 10 lorsque ledit au moins un produit (102₁, ..., 102ₙ) est exécuté sur ledit au moins un ordinateur (100₁, ..., 100ₙ) .
